# EUROPEAN PATENT SPECIFICATION

(11) **EP 3 139 478 B1**
(45) Date of publication and mention of the grant of the patent: **27.04.2022**
(21) Application number: 14890573.0
(22) Date of filing: 29.04.2014
(51) Int. Cl.: H02K 1/27, H02K 1/02, B62D 5/04

(54) **PERMANENT MAGNET MOTOR**
DAUERMAGNETMOTOR
MOTEUR À AIMANT PERMANENT

(43) Date of publication of application: 08.03.2017
(73) Proprietor: Mitsubishi Electric Corporation, Chiyoda-ku Tokyo 100-8310 (JP)
(72) Inventor: TAKIZAWA Yuji, Tokyo 100-8310 (JP); HORI Shusuke, Tokyo 100-8310 (JP); ICHIKAWA Takanori, Tokyo 100-8310 (JP); AKUTSU Satoru, Tokyo 100-8310 (JP)
(74) Representative: Hoffmann Eitle
(86) International application number: PCT/JP2014/061920
(87) International publication number: WO 2015/166544

(56) References cited:
- EP-A2- 1 895 636
- EP-A2- 2 107 666
- WO-A1-2013/054439
- JP-A- 2007 028 857
- JP-A- 2007 028 857
- JP-A- 2008 086 193
- JP-A- 2008 086 193
- JP-A- 2009 171 790
- US-A1- 2009 195 104
- US-A1- 2009 267 438
- US-A1- 2014 145 547
- None

## Description

### TECHNICAL FIELD

The present invention relates to a permanent magnet type motor equipped with a rotor having permanent magnets that do not contain a heavy rare earth element such as dysprosium (Dy), terbium (Tb), or the like.

### BACKGROUND ART

The structure of a permanent magnet type motor has been created in the past; and as a permanent magnet of a rotor, a sintered magnet different in distribution of a heavy rare earth element such as Dy or the like is disclosed in JP S62-37907 A and JP 5310544. JP S62-37907 A is the sintered magnet having structure in which areas different in a rate of content of the heavy rare earth element such as Dy or the like are integrally coupled. Furthermore, JP 531054 is structure having a distribution in a rate of content in the sintered magnet by diffusing Dy.

WO 2013/054439 discloses a permanent magnet motor as defined in the preamble of independent claim 1. Further prior art can be found in EP 2 107 666 A2, EP 1 895 636 A2, JP 2008 086193 A, US 2009/195104 A1, US 2009/267438 A1, and JP 2007 028857 A.

### SUMMARY OF INVENTION

### PROBLEMS TO BE SOLVED BY THE INVENTION

Like a motor in which magnets are arranged on an outer circumference surface portion of the rotor, magnetic coercive force is increased to be difficult to be demagnetized by forming a portion having a high rate of content of Dy on both end portions of the magnet that are easy to be demagnetized; however, a problem exists in that the heavy rare earth element that is rarer than neodymium is added and accordingly a magnet cost increases.

The present invention has been made to solve the foregoing problem, and an object of the present invention is to obtain a permanent magnet type motor in which the amount of usage of a magnet effective for torque is found out in a magnet in which a heavy rare earth element such as Dy that improves magnet coercive force is not added and thereby being capable of achieving a reduction in motor cost and avoiding a risk of cost fluctuations of the heavy rare earth element such as Dy.

### MEANS FOR SOLVING THE PROBLEMS

The present invention is defined by the appended independent claim 1. The respective dependent claims describe optional features and preferred embodiments.

According to an aspect of the present invention, there is provided a permanent magnet type motor including: a stator composed of armature windings and a stator core having a slot that incorporates each of the armature windings; and a rotor composed of a rotor core provided on the inner circumferential side of the stator via an air gap and configured by laminating electromagnetic steel sheets, a plurality of permanent magnets fixed at intervals on a circumferential surface portion of the rotor core, and a shaft that passes through along a center axis line of the rotor core, wherein when the number of poles of the permanent magnets is set to P and the number of the slots is set to N, the relationship of P:N=2n:12n is established, where n is an integer equal to or more than 2; an air gap length between the inner circumference of the stator core and the outer circumference of the permanent magnets is less than or equal to 1.0 mm; the permanent magnet does not contain a heavy rare earth element and is embedded in the rotor core except for a curve portion of an outer circumference portion; and a circumferential center thickness of the permanent magnet is 2.4 to 4.2 mm, wherein a protrusion of said rotor core extending in axial direction is provided between two adjacent permanent magnets and an air gap is formed between each protrusion and permanent magnet, the outer diameter of said motor is 80mm to 100mm, the output thereof is 400W to 900W and when a circumferential center thickness of said permanent magnet is t and a circumferential length of said permanent magnet is Wm, the relationship of t/Wm≥0.2 is established, when a thickness of said protrusion is Wc and a thickness of circumferential both end portions of said permanent magnet is We, the relationship of 1.8mm≤We

### ADVANTAGEOUS EFFECT OF THE INVENTION

The permanent magnet type motor according to the present invention can avoid from rapidly decreasing torque due to demagnetization of the magnet when a circumferential center thickness of the permanent magnet is equal to or more than 2.4 mm, even when the heavy rare earth element such as Dy that improves magnet coercive force is not contained. Furthermore, the permanent magnet that does not contain the heavy rare earth element becomes thicker in magnet thickness than a conventional magnet that contains the heavy rare earth element and accordingly it is difficult to increase torque for the amount of usage of the magnet at a constant air gap length; however, the torque can be increased by effectively utilizing the amount of usage of the magnet at a thickness of less than or equal to 4.2 mm. Therefore, the heavy rare earth element that is high cost is not used and thus the permanent magnet type motor capable of achieving a reduction in motor cost and avoiding a risk of cost fluctuations can be obtained.

Objects, features, aspects, and advantageous effects other than the above mention of the present invention will become more apparent from the following detailed description of the present invention which refers to the accompanying drawings.

### BRIEF DESCRIPTION OF THE DRAWINGS

Fig. 1 is an explanation view showing an electric power steering apparatus for a vehicle in which a permanent magnet type motor;
Fig. 2 is a sectional side view of an electric drive apparatus of Fig. 1;
Fig. 3 is a view showing an electrical circuit diagram of the electric power steering apparatus of Fig. 1;
Fig. 4 is a transverse sectional view showing a relevant part of the permanent magnet type motor of Fig. 2;
Fig. 5 is a perspective view showing a rotor of Fig. 2;
Fig. 6 is a view showing the relationship between a torque ratio and a torque increase rate to the thickness of a permanent magnet as shown in Fig. 4 and 5;
Fig. 7 is a view showing the relationship between the thickness of the permanent magnet and the torque ratio to an air gap length as shown in Fig. 4 and 5;
Fig. 8 is a view for explaining the thickness of both end portions of a hog-backed-shaped permanent magnet as shown in Fig. 4,5; and
Fig. 9 is a view for explaining the thickness of both end portions of a roof-tile-shaped permanent magnet as shown in Fig. 4 and 5.

### MODE FOR CARRYING OUT THE INVENTION

Hereinafter, respective embodiments of a permanent magnet type motor of the present invention will be described with reference to drawings. Incidentally, the same reference numerals as those shown in the respective drawings represent the same or corresponding elements.

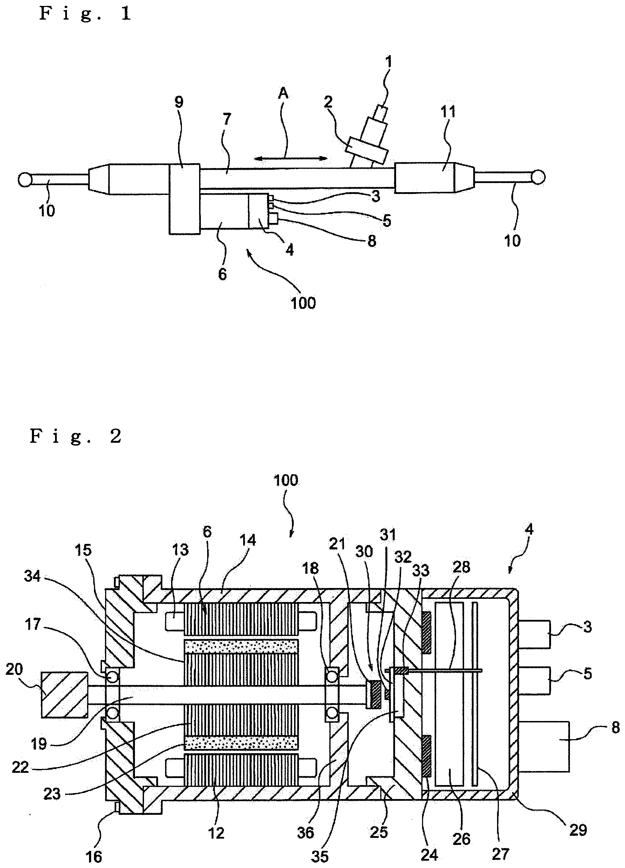

Fig. 1 is an explanation view showing an electric power steering apparatus of an automobile, in which a permanent magnet type motor (hereinafter, merely abbreviated as a "motor"). A driver performs steering of a steering wheel (not shown in the drawing); and its torque is transmitted to a shaft 1 via a steering shaft (not shown in the drawing). At this time, torque detected by a torque sensor 2 is converted to an electrical signal and is transmitted to an electronic control unit (ECU) 4 via a first connector 3 through a cable (not shown in the drawing). The ECU 4 is equipped with a control substrate and an inverter circuit that drives a motor 6.

On the other hand, automobile information such as vehicle speed is converted to an electrical signal and is transmitted to the ECU 4 via a second connector 5. The ECU 4 calculates necessary assist torque from the automobile information such as the torque of the steering and the vehicle speed and supplies a current to the motor 6 through an inverter. The motor 6 is arranged in a direction parallel to a moving direction shown by an arrow A of a rack shaft in a housing 7. Furthermore, power source supply to the ECU 4 is performed from a battery or an alternator via a power source connector 8. Torque generated by the motor 6 is decelerated by a gear box 9 in which a belt (not shown in the drawing) and a ball screw (not shown in the drawing) are incorporated and generates propulsive force that moves the rack shaft (not shown in the drawing) placed inside the housing 7 in the direction of the arrow A to assist steering force of the driver.

This allows a tie-rod 10 to move and thus tires can be turned to circle the vehicle. As a result of being assisted by the torque of the motor 6, the driver can circle the vehicle with less steering force. Incidentally, a rack boot 11 is provided so that a foreign substance does not enter into the electric power steering apparatus. Furthermore, the motor 6 and the ECU 4 are integrated to constitute an electric drive apparatus 100.

Fig. 2 is a sectional side view of the electric drive apparatus 100. First, the motor 6 will be described. The motor 6 has a stator core 12 configured by laminating electromagnetic steel sheets, an armature winding 13 incorporated in slots of the stator core 12, and a frame 14 that fixes the stator core 12. Further, the frame 14 is fixed to a housing 15 on the opposite side to the ECU 4 of the motor 6 by bolts 16. A first bearing 17 is provided on the housing 15 and the first bearing 17 rotatably supports a shaft 19 together with a second bearing 18. The second bearing 18 is supported to a wall portion 36 that is provided integrally with or separately from the frame 14.

A pulley 20 is press-fitted at one end portion of the shaft 19, that is, on the output axis side; and the pulley 20 is operable to transfer driving force to the belt of the electric power steering apparatus. A permanent magnet for a sensor 21 is provided on the other end portion of the shaft 19. A rotor core 22 is press-fitted onto the shaft 19 and a permanent magnet 23 is fixed to the rotor core 22. A first connector 3 that receives a signal from the torque sensor 2, a second connector 5 that receives the automobile information such as the vehicle speed, and the power source connector 8 for the power source supply are attached to the ECU 4.

The ECU 4 includes the inverter circuit that drives the motor 6; and the inverter circuit has a switching element 24 such as a metal oxide semiconductor field effect transistor (MOS-FET). As the switching element 24, there is conceivable, for example, a configuration in which a bare chip is mounted on a direct bonded copper (DBC) substrate and a configuration in which a bare chip is molded with resin to form a module. Current that drives the motor 6 flows in the switching element 24, thereby generating heat. Consequently, the switching element 24 is structured to dissipate the heat by being brought into contact with a heat sink 25 via adhesive, an insulation sheet, or the like. The inverter circuit includes a smoothing capacitor, a coil for eliminating noise, a power source relay, busbars that electrically connect those components, and the like, in addition to the switching element 24; however, such components are omitted in Fig. 2.

The busbars are integrally formed with resin to form an intermediate member 26. Furthermore, a control substrate 27 is provided next to the intermediate member 26. The control substrate 27 sends a control signal to the switching element 24 that adequately drives the motor 6 on the basis of the information received from the first connector 3 and the second connector 5. The control signal is transmitted by a connection member 28 that electrically connects between the control substrate 27 and the switching element 24. The connection member 28 is fixed by wire-bonding, press-fitting, soldering, or the like. The inverter circuit and the control substrate 27 are covered by a case 29. The case 29 may be made of resin, may also be made of metal such as aluminum , or may also be made of one in which resin and metal such as aluminum are combined. The control substrate 27 is arranged so as to be along a plane perpendicular to the shaft 19 of the motor 6.

A sensor portion 30 is arranged on the motor 6 side of the heat sink 25. The sensor portion 30 has a magnetic sensor 31, a substrate 32, the connection member 28, and a supporting member 33; and the substrate 32 mounted with the magnetic sensor 31 is fixed to the heat sink 25 by screws (not shown in the drawing). The magnetic sensor 31 is arranged at a position coaxially with and corresponding to the permanent magnet for the sensor 21. The magnetic sensor 31 detects a magnetic field generated by the permanent magnet for the sensor 21 and detects a rotational angle of a rotor 34 of the motor 6 by knowing the direction of the magnetic field, the rotor 34 being composed of the rotor core 22 and the permanent magnet 23. The ECU 4 supplies an adequate drive current to the motor 6 according to the rotational angle.

Further, the connection member 28 is supported by the supporting member 33 and electrically connects the substrate 32 of the sensor portion 30 and the control substrate 27. This connection may be made by press-fitting or soldering. Incidentally, the connection member 28 needs to pass through the heat sink 25 and the intermediate member 26; and thus, a hole portion (not shown in the drawing) through which the connection member 28 passes is formed in the heat sink 25 and the intermediate member 26. Further, although not shown in the drawing, the intermediate member 26 is configured such that a guide capable of positioning the connection member 28 is provided. Fig. 2 shows an example in which the magnetic sensor 31 is mounted on the substrate different from the control substrate 27; however, a configuration may be made such that the magnetic sensor 31 is mounted on the control substrate 27 to detect a magnetic flux leaked from the permanent magnet for the sensor 21 via the heat sink 25. Furthermore, the positional relationship between the intermediate member 26 and the control substrate 27 may be arranged in a direction opposite to Fig. 2.

In Fig. 2, the magnetic sensor 31 is used as a rotation sensor; however, a resolver may be used. A concave portion 35 is formed in the heat sink 25, thereby increasing the distance between the magnetic sensor 31 mounted on the substrate 32 of the sensor portion 30 and the surface of the heat sink 25. The heat sink 25 is fixed to the frame 14 of the motor 6 by screws, shrink-fitting, or the like. The heat sink 25 is fixed to the frame 14 of the motor 6 in such a manner; and thus, the heat of the heat sink 25 can be transferred to the frame 14 of the motor 6.

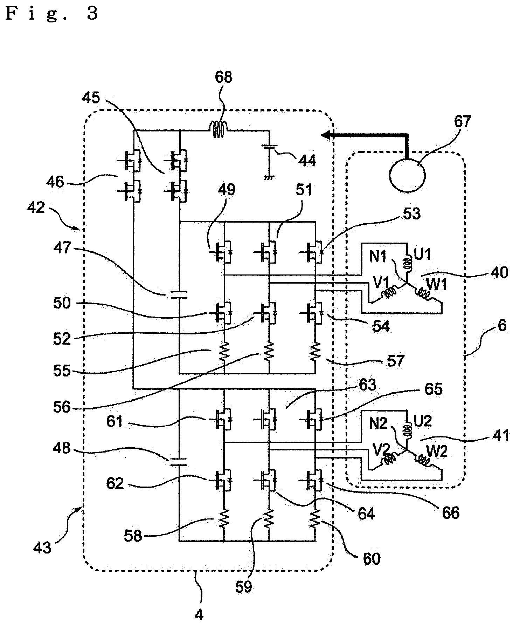

Fig. 3 is an electrical circuit diagram of an electric power steering apparatus in which the motor 6 of Fig.2 is incorporated. A case of a double three phase winding motor is shown; however, a multiple polyphase winding motor may also be permissible. The motor 6 has a first armature winding 40 composed of a first U-phase winding U1, a first V-phase winding V1, and a first W-phase winding W1; and a second armature winding 41 composed of a second U-phase winding U2, a second V-phase winding V2, and a second W-phase winding W2. Y-connection is shown in Fig. 3; however Δ-connection may also be permissible.

As for the ECU 4, the first inverter 42 and the second inverter 43 are depicted and other configuration is omitted. A three phase current is supplied from the inverters 42,43 to two armature windings 40,41, respectively. A direct current (DC) power source is supplied from a power source 44 such as a battery to the ECU 4 to which power source relays 45,46 are connected via a coil for eliminating noise 68. Fig. 3 depicts as if the power source 44 is located inside the ECU 4; however, actually, electric power is supplied from the external power source 44 such as the battery via the power source connector 8. The power source relays include the first power source relay 45 and the second power source relay 46, each of which is composed of two MOS-FETs; and the power source relays 45,46 are opened in failure so as not flow an excessive current. Incidentally, in Fig. 3, the first power source relay 45 and the second power source relay 46 are connected in the order of the power source 44, the coil 68, and the power source relays 45,46; however, the first power source relay 45 and the second power source relay 46 may be provided at a position nearer to the power source 44 than the coil 68.

A first capacitor 47 and a second capacitor 48 are smoothing capacitors. In Fig. 3, the first capacitor 47 and the second capacitor 48 are each configured by one capacitor, but may be each configured by a plurality of capacitors connected in parallel. The first inverter 42 and the second inverter 43 are each configured by a bridge using six MOS-FETs. In the first inverter 42, a first MOS-FET 49 and a second MOS-FET 50 are connected in series; a third MOS-FET 51 and a fourth MOS-FET 52 are connected in series; and a fifth MOS-FET 53 and a sixth MOS-FET 54 are connected in series. Further, these three sets of the MOS-FETs (49,50; 51,52; and 53,54) are connected in parallel.

Further, one shunt resistor is connected to the ground (GND) side for each of the lower three MOS-FETs (the second MOS-FET 50, the fourth MOS-FET 52, and the sixth MOS-FET 54), the shunt resistors being regarded as a first shunt 55, a second shunt 56, and a third shunt 57, respectively. These shunts 55 to 57 are used for detecting current values. Incidentally, three shunts 55 to 57 are exemplified; however two shunts or one shunt may also be permissible because current detection can be made and such a configuration may also be permissible. As shown in Fig. 3, the supply of current to the motor 6 side is supplied from between the first MOS-FET 49 and the second MOS-FET 50 to the U1-phase of the motor 6 through a busbar or the like, from between the third MOS-FET 51 and the fourth MOS-FET 52 to the V1-phase of the motor 6 through a busbar or the like, and from between the fifth MOS-FET 53 and the sixth MOS-FET 54 to the W1-phase of the motor 6 through a busbar or the like, respectively.

The second inverter 43 is also a similar configuration. In the second inverter 43, the first MOS-FET 61 and the second MOS-FET 62 are connected in series; the third MOS-FET 63 and the fourth MOS-FET 64 are connected in series; and the fifth MOS-FET 65 and the sixth MOS-FET 66 are connected in series. Further, these three sets of the MOS-FETs (61,62; 63,64; and 65,66) are connected in parallel. Further, one shunt resistor is connected to the GND side for each of the lower three MOS-FETs (the second MOS-FET 62, the fourth MOS-FET 64, and the sixth MOS-FET 66), the shunt resistors being regarded as a first shunt 58, a second shunt 59, and a third shunt 60, respectively. These shunts 58 to 60 are used for detecting current values.

As shown in Fig. 3, the supply of current to the motor 6 side is supplied from between the first MOS-FET 61 and the second MOS-FET 62 to the U2-phase of the motor 6 through a busbar or the like, from between the third MOS-FET 63 and the fourth MOS-FET 64 to the V2-phase of the motor 6 through a busbar or the like, and from between the fifth MOS-FET 65 and the sixth MOS-FET 66 to the W2-phase of the motor 6 through a busbar or the like, respectively. In Fig. 3, motor relays that electrically interrupt the motor 6, the first and the second inverters 42,43 in failure are not shown; however, in the case of providing the motor relays, there are conceivable a case where the moto relay is provided at each of the neutral points N1,N2, as the case may be between the motor and each of the inverters.

Two first and second inverters 42,43 perform switching by signals sent from a control circuit to the MOS-FETs 49 to 54 and 61 to 66 according to rotational angles detected by a rotation angle sensor 67 (corresponding to the magnetic sensor 31 of Fig. 2) equipped on the motor 6 and supplies a desired three phase current to the first armature winding 40 and the second armature winding 41. Incidentally, a giant magnetoresistance (GMR) sensor, an anisotropic magnetoresistance (AMR) sensor, a resolver, or the like is used as the rotation angle sensor 67.

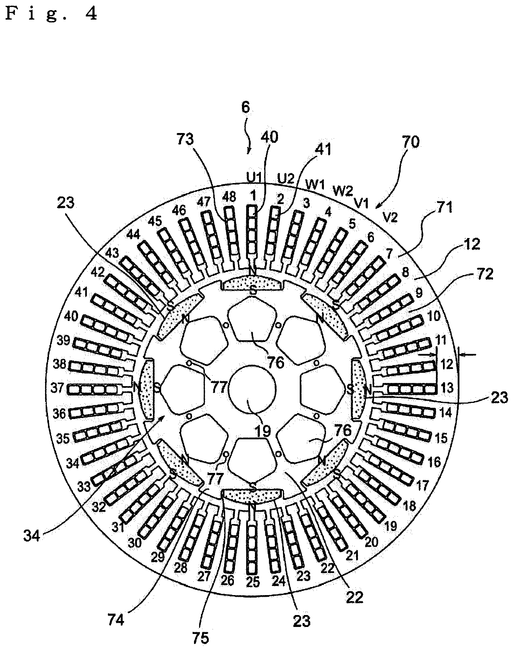

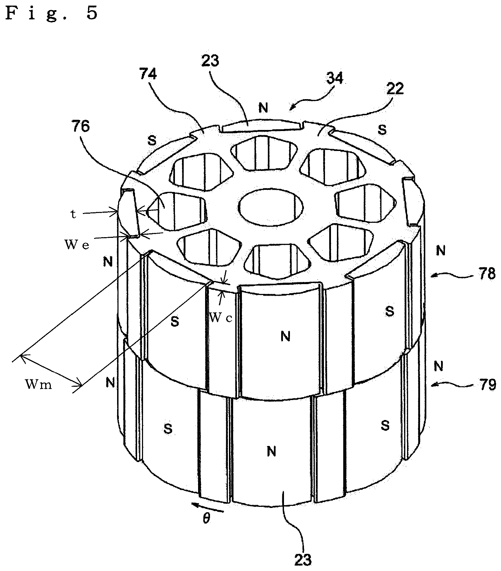

Fig. 4 is a transverse sectional view of a relevant part of the motor 6 of Fig. 2; and Fig. 5 is a perspective view of the rotor 34 of Fig. 2. A stator 70 having the first armature winding 40, the second armature winding 41, and the stator core 12 surrounds the rotor 34 on the inner circumferential side of the stator 70 via an air gap. The stator core 12 is composed of an annular core back 71 made of magnetic material such as electromagnetic steel sheets and teeth 72 extending in the direction of the shaft 19 of the rotor 34 from the core back 71. The armature windings 40,41 are each incorporated in a slot 73 formed between the adjacent teeth 72. Although not shown in the drawing, insulating paper or the like is inserted between the armature winding 40 and the stator core 12 and between the armature winding 41 and the stator core 12 to secure electrical insulation.

A total of forty-eight teeth 72 are provided; and therefore, the number of the slots 73 is also forty-eight. Four coils of the armature winding 40 or 41 are incorporated in each one of the slots 73. The first armature winding 40 is composed of three phases of the U1-phase, the V1-phase, and the W1-phase; and the second armature winding 41 is composed of three phases of the U2-phase, the V2-phase, and the W2-phase. As shown in Fig. 4, the armature windings 40, 41 are arranged in the order of U1, U2, W1, W2, V1, and V2 from a first slot 73; and the windings are also arranged in the order of U1, U2, W1, W2, V1, and V2 from a subsequent seventh slot and are arranged in the similar order to a forty-eighth slot.

In this regard, however, the first armature winding 40 is arranged so that the U1 winding of the first slot 73 and the U1 winding of the seventh slot 73 are opposite to each other in the direction of currents; and the second armature winding 41 is also similarly arranged. More specifically, it is configured to be a distributed winding which is wound from the first slot 73 to the seventh slot 73. Then, the armature windings 40,41 straddle a total of six teeth 72. This corresponds to an electrical angle of 180 degrees and a short pitch winding coefficient becomes 1. Thus, a magnetic flux generated by the permanent magnets 23 can be effectively used, the motor 6 with a small size and high torque can be obtained, and the amount of the permanent magnets 23 can be reduced; and therefore, an effect exists in that a reduction in cost can be achieved as compared to a motor with a small winding coefficient.

The rotor 34 equipped with the permanent magnets 23 on a circumferential surface portion of the rotor core 22 is provided on the inner circumferential side of the stator 70. Eight permanent magnets 23 are circumferentially disposed at intervals to provide an 8-pole configuration. Polarities of the adjacent permanent magnets 23 are opposite to each other. Further, protrusions 74 are provided on the rotor core 22. An air gap 75 which is for reducing leakage flux is formed between the protrusion 74 and the permanent magnet 23. An effect exists in that the protrusion 74 reduces an air gap length of the motor 6 and inductance increases. This increases a salient-pole ratio; and thus an effect exists in that reluctance torque is easily generated and torque during high speed rotation can be improved. Fig. 4 shows a motor with 8 poles and 48 slots; however, when the number of poles of the permanent magnets is set to P and the number of the slots is set to N, there can be applied to a motor of P:N=2n:12n (n is an integer equal to or more than 2). This is because that when n is set to n=2, 3, 4, 5,---, the relationship of P:N=4:24,6:36,8:48,10:60,--- is established, which only increases constantly for each two poles, and there is no change in a stator having 2 slots in each pole and each phase when viewed from the magnet.

It is effective to reduce the air gap length between the inner diameter of the stator core and the protrusion 74 as much as possible and to increase the protrusion 74; and therefore, an air gap length between the inner diameter of the stator core and each of circumferential both end portions of the permanent magnet 23 increases as compared to the air gap length between the inner diameter of the stator core and the protrusion 74. It is effective to set the height to be opposite to a protrusion of magnet positioning in a normal surface permanent magnet type motor and to provide the protrusions 74 over an axial direction because the volume of the protrusion can be increased. More specifically, except for curve portions of an outer circumference portion of the permanent magnet 23, a configuration is made such that the lateral sides of the permanent magnet 23 are also surrounded by the protrusions 74 and the permanent magnet 23 is embedded in the rotor core 22.

Hole portions 76 are formed in the rotor core 22 at equally spaced intervals along the circumferential direction. A reduction in weight and a reduction in inertia can be achieved by providing the hole portions 76. The rotor core 22 is configured by laminating electromagnetic steel sheets or the like and the electromagnetic steel sheets are coupled to each other by caulking portions 77. The shaft 19 passes through a center axis line of the rotor core 22. Referring to Fig. 5, the rotor 34 is composed of a first rotor portion 78 and a second rotor portion 79 which are axially disposed. The second rotor portion 79 and the first rotor portion 78 are identical design and their axial line lengths are also the same. Further, the first rotor portion 78 and the second rotor portion 79 are arranged at positions deviated in a rotational angle direction to each other. Normally, in order to prevent the permanent magnet 23 from scattering due to a crack and/or a chip of the permanent magnet 23, a metallic cylinder made of a thin plate such as stainless steel is covered on the outer circumference surface of the rotor 34.

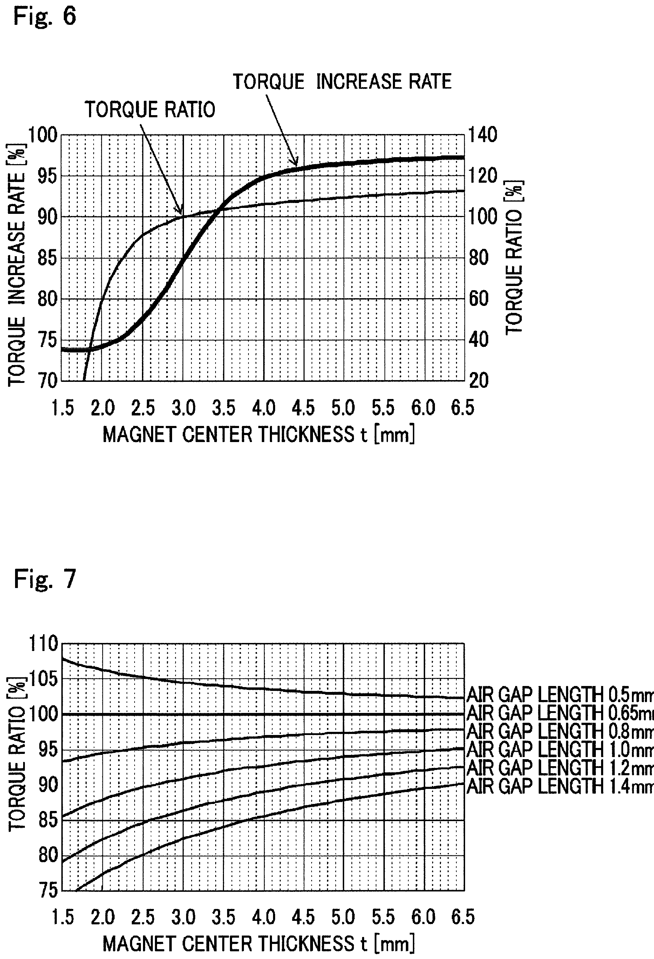

Fig. 6 is a view showing the relationship between the torque ratio and the torque increase rate to the thickness of the permanent magnet as shown in Fig.4 and 5 Fig. 6 shows the relationship between a torque ratio when the circumferential center thickness of the permanent magnet (magnet center thickness) is changed and a torque increase rate defined hereinafter at an air gap length of 0.65 mm. The air gap length is a gap between the inner circumference (the inner circumference surface of the tooth 72 facing the rotor) of the stator core 12 and the outer circumference (the outer circumference surface of the circumferential center of the permanent magnet) of the permanent magnet. Reference letter t is a circumferential center thickness of the permanent magnet 23 (see Fig. 5). Incidentally, the torque takes into account a decrease in torque due to demagnetization. The motor has a diameter of 90 mm in the outer diameter of the motor of Fig. 4.

When roundness of the inner circumference surface of the stator 70, deflection of the rotor 34, the metallic cylinder for magnet scattering prevention are taken into account, the air gap length of the motor 6 needs about 0.6 mm. Further, the processing dimension of the magnet is about ±0.05 mm; and thus, the air gap length is set to 0.65 mm. Furthermore, the torque ratio is a ratio when a magnet center thickness of 3.0 mm, which is the maximum in gradient of the following torque increase rate, is set to 100%. The torque rapidly decreases due to demagnetization when the magnet center thickness is less than or equal to 2.4 mm. Since the torque decreases in the case of less than or equal to 2.4 mm, a driver has to put forth large steering force; and thus such a magnet center thickness is not suitable as a motor use area.

A torque increase rate α is defined by α={T(t+Δt)-T(t)}/{T(t)-T(t-Δt)} from a torque T(t) at a certain magnet center thickness t, a torque T(t+Δt) in the case of increasing the thickness by Δt, and a torque T(t-Δt) in the case of decreasing the thickness by Δt. More specifically, α is an index that represents a torque gradient before and after the magnet center thickness; and when the torque rapidly decreases at a substantially constant gradient and/or when the torque hardly changes at a substantially constant gradient, α becomes a substantially constant value.

In the case of the former, that is, from Fig. 6, when the torque rapidly decreases at the substantially constant gradient, it shows a case that t is less than or equal to 2.4 mm and the torque rapidly decreases due to demagnetization; and when t is less than or equal to 2.0 mm, it shows that the torque linearly decreases. In the case of the latter, that is, when the torque hardly changes at the substantially constant gradient, it show a case that t is equal to or more than 4.2 mm, the torque is not improved so much even if t increases, and the torque becomes a substantially constant value.

From the above, in order to sufficiently assist steering of the driver by the motor, t needs to be t≥2.4mm; and in order to suppress motor cost by suppressing an increase of the amount of usage of the magnet, it is obvious that t≤4.2mm is appropriate. The motor is suitable for applying to a motor with an outer diameter of 80 to 100 mmϕ and an output of 400 to 900 W. Since a motor for an electric power steering apparatus (EPS) is attached to a steering gear, the motor comes into contact with the steering gear if the outer diameter is large; and thus, the size of the outer diameter is naturally limited.

Fig. 7 is a view showing the relationship between the circumferential center thickness of the permanent magnet and the torque ratio to the air gap length as shown in Fig. 4 and 5. Fig. 7 shows a change in the torque ratio in the case of changing the air gap length. The torque ratio is a ratio to torque at each magnet center thickness in the case of an air gap length of 0.65 mm and the torque ratio is 100% regardless of the magnet center thickness in the case of the air gap length of 0.65 mm. The lower limit of the torque ratio in Fig. 6 is 88% (at a magnet center thickness of 2.4 mm); and if the air gap length is less than or equal to 1.0 mm, the torque ratio is equal to or more than 89% in Fig. 7 at a magnet center thickness of equal to or more than 2.4 mm and steering of the driver can be sufficiently assisted by the motor.

Particularly, in the electric power steering apparatus for a vehicle, torque per unit of magnet weight is increased by taking into account the processing accuracy of the magnet, by setting the air gap length to the range of 0.6±0.05 mm, and by setting the magnet center thickness to near 3.0 mm that is a large change in the torque increase rate; and therefore, there can be achieved a small and lightweight motor effective for improvement in fuel consumption. Incidentally, in this embodiment, the description has been made on the case of a double three phase motor with 8 poles and 48 slots; however, it goes without saying that similar effects can be obtained even in the case of a single three phase motor with 2n poles and 12n slots (n is an integer equal to or more than 2).

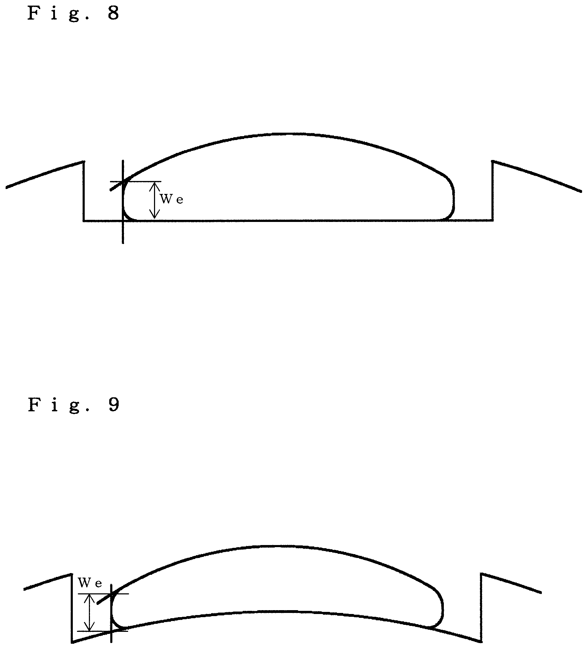

When a magnet center thickness is set to t and a circumferential length of a magnet (magnet width) is set to Wm, the relationship of t/Wm≥0.2 is held (t and Wm are shown in Fig. 5). In a permanent magnet that does not contain a heavy rare earth element, the thickness of the magnet needs to be increased against demagnetization; and accordingly, the magnet center thickness t becomes larger at the same magnet width Wm than that of the conventional permanent magnet that contains the heavy rare earth element and the relationship of t/Wm≥0.2 is needed. A hog-backed-shaped magnet whose magnet base is a flat surface is described above. However, in a roof-tile-shaped magnet whose magnet base is also a curved surface, the outer diameter and the inner diameter of a sintered magnet are processed by being polished by a whetstone. Therefore, effects exist in that the larger the magnet shape in t/Wm, the more difficult it is for a crack and/or a chip of a magnet center portion to occur, a yield ratio is improved, and a reduction in cost can be achieved. Incidentally, the hog-backed-shaped magnet is shown in Fig. 8 and the roof-tile-shaped magnet is shown in Fig. 9.

When a thickness of circumferential both end portions of a permanent magnet (both end portions of the magnet) is set to We and a height of a protrusion 74 is set to Wc, the relationship of 1.8 mm≤We<Wc is held. Incidentally, the protrusion height Wc is a height from the lower end of the protrusion 74 to the outer circumference surface of the protrusion (see Fig. 5), that is, a height from the lower end of the circumferential both end portions of the permanent magnet to the outer circumference surface of the protrusion 74. In normal processing of a neodymium sintered magnet, when the thickness of the magnet becomes thinner to about less than or equal to 1.8 mm, a crack and/or a chip is easily occurred and a yield ratio deteriorates; and accordingly, 1.8 mm is an actual mass production limit. Furthermore, in order to prevent the crack and/or the chip, a corner R of about 0.4 mm is needed; and the magnet is biased to the core protrusion 74 or is positioned by a jig. Accordingly, positioning is difficult when a thickness of a straight portion of the lateral side of the magnet is less than or equal to 1.0 mm; and thus, the relationship of 1.8mm≤We is needed due to both causes.

In the processing of the sintered magnet, the crack and/or the chip at a corner portion is prevented by providing the corner R. In a hog-backed-shaped magnet like Fig. 8, the thickness We at this time is defined by the distance between intersection points in which an extended line of an outer diameter curve and an extended line of a base intersect with a vertical tangent line coming into contact with the lateral side of the magnet, respectively. Furthermore, in a roof-tile-shaped magnet like Fig. 9, the thickness We is defined by the distance between intersection points in which an extended line of an outer diameter curve and an extended line of an inner diameter curve intersect with a vertical tangent line coming into contact with the lateral side of the magnet, respectively. In addition, in order to improve torque at high speed rotation, it is effective to increase the protrusion 74; and therefore, it is particularly effective to improve the torque when the protrusion height Wc increases as compared to the thickness We and thus the relationship of We<Wc is needed. This prevents the crack and/or the chip at both end portions of the magnet and can reduce rotational pulsation. In a multiple polyphase motor, energization can be independently applied to multiple windings so as to cancel the rotational pulsation; and therefore, noise and vibration can be further reduced.

Particularly, in an electric power steering apparatus for a vehicle, steering feeling is improved by reducing the rotational pulsation and a motor that achieves comfortable driving can be provided by reducing noise and vibration. Furthermore, when the magnet is cracked and/or chipped in manufacturing processes such as magnet attachment, magnetization, and assembly, and the crack and/or the chip is remained in the motor, a rotor is locked to cause a danger. Particularly, the magnet after magnetization has magnetic force; and accordingly, it is difficult to remove the crack and/or the chip. However, the crack and/or the chip is difficult to occur by the configuration of 1.8mm≤We and a removing process in the manufacturing processes can also be simplified.

Incidentally, the present invention can freely combine the respective features of the examples and appropriately modify and/or omit features, within the scope of the appended claims

## Claims

1. A permanent magnet type motor comprising:
a stator (70) composed of armature windings (40,41) and a stator core (12) having a slot (73) that incorporates each of said armature windings (40,41); and
a rotor (34) composed of a rotor core (22) provided on the inner circumferential side of said stator (70) via an air gap and configured by laminating electromagnetic steel sheets, a plurality of permanent magnets (23) fixed at intervals on a circumferential surface portion of said rotor core (22), and a shaft (19) that passes through along a center axis line of said rotor core (22),
wherein a protrusion (74) of said rotor core (22) is provided between two adjacent permanent magnets (23) and is extending in axial direction, and an air gap (75) is formed between said protrusion (74) and said permanent magnet (23), and
when the number of poles of said permanent magnets (23) is set to P and the number of said slots (73) is set to N, the relationship of P:N=2n:12n is established, where n is an integer equal to or more than 2;
**characterized in that**
an air gap length between the inner circumference of said stator core (12) and the outer circumference of said permanent magnets (23) is less than or equal to 1.0 mm; said permanent magnets (23) do not contain a heavy rare earth element and are embedded in said rotor core (22) with the lateral sides of said permanent magnet (23) being surrounded by said protrusions (74) except for a curve portion of an outer circumference portion;
an outer diameter of said motor is 80 to 100 mm, an output thereof is 400 to 900 W, and a circumferential center thickness of said permanent magnet (23) is 2.4 to 4.2 mm; and
when a circumferential center thickness of said permanent magnet (23) is set to t and a circumferential length of said permanent magnet (23) is set to Wm, the relationship of t/Wm≥0.2 is established; and
when a height of said protrusion (74) provided between said permanent magnets (23) is set to Wc and a thickness of circumferential both end portions of said permanent magnet (23) is set to We, the relationship of 1.8 mm≤We≤Wc is established.

2. The permanent magnet type motor according to claim 1, wherein said armature windings (40,41) are multiple polyphase windings.

3. An electric power steering apparatus for a vehicle, said electric power steering apparatus using the permanent magnet type motor as set forth in any one of claim 1 to claim 2.

## Patentansprüche

1. Motor vom Permanentmagnettyp, umfassend:
einen Stator (70), der aus Ankerwicklungen (40, 41) und einem Statorkern (12) mit einem Schlitz (73) besteht, der jede der Ankerwicklungen (40, 41) aufnimmt;
und einen Rotor (34), der aus einem Rotorkern (22), der an der Innenumfangsseite des Stators (70) über einen Luftspalt vorgesehen und durch Laminieren von elektromagnetischen Stahlblechen konfiguriert ist, einer Vielzahl von Permanentmagneten (23), die in Intervallen an einem Umfangsoberflächenabschnitt des Rotorkerns (22) befestigt sind, und einer Welle (19), die entlang einer Mittelachsenlinie des Rotorkerns (22) hindurchgeht, besteht,
wobei ein Vorsprung (74) des Rotorkerns (22) zwischen zwei benachbarten Permanentmagneten (23) vorgesehen ist und sich in axialer Richtung erstreckt, und ein Luftspalt (75) zwischen dem Vorsprung (74) und dem Permanentmagneten (23) gebildet ist, und
wenn die Anzahl der Pole der Permanentmagnete (23) auf P und die Anzahl der Schlitze (73) auf N eingestellt ist, die Beziehung P:N=2n:12n hergestellt ist, wobei n eine ganze Zahl gleich oder größer als 2 ist;
**dadurch gekennzeichnet, dass**
eine Luftspaltlänge zwischen dem Innenumfang des Statorkerns (12) und dem Außenumfang des Permanentmagneten (23) weniger als oder gleich 1,0 mm beträgt; die Permanentmagneten (23) kein schweres Seltenerdelement enthält und in den Rotorkern (22) eingebettet sind, wobei die seitlichen Seiten des Permanentmagneten (23) mit Ausnahme eines Kurvenabschnitts eines Außenumfangsabschnitts von den Vorsprüngen (74) umgeben sind;
ein Außendurchmesser des Motors 80 bis 100 mm beträgt, eine Leistung desselben 400 bis 900 W beträgt und eine Umfangs-Mitteldicke des Permanentmagneten (23) 2,4 bis 4,2 mm beträgt; und
wenn eine Umfangs-Mitteldicke des Permanentmagneten (23) auf t und eine Umfangslänge des Permanentmagneten (23) auf Wm eingestellt ist, die Beziehung t/Wm≥0,2 hergestellt ist; und
wenn eine Höhe des Vorsprungs (74), der zwischen den Permanentmagneten (23) vorgesehen ist, auf Wc und eine Dicke der beiden Umfangsendabschnitte des Permanentmagneten (23) auf We eingestellt ist, die Beziehung 1,8≤We≤Wc hergestellt ist.

2. Motor vom Permanentmagnettyp nach Anspruch 1, wobei die Ankerwicklungen (40, 41) mehrphasige Wicklungen sind.

3. Elektrische Servolenkungsvorrichtung für ein Fahrzeug, wobei die elektrische Servolenkungsvorrichtung den Motor vom Permanentmagnettyp nach einem der Ansprüche 1 bis 2 verwendet.

## Revendications

1. Moteur de type à aimant permanent comprenant :
un stator (70) composé d'enroulements d'induit (40, 41) et d'un noyau de stator (12) présentant une fente (73) qui incorpore chacun desdits enroulements d'induit (40, 41) ; et un rotor (34) composé d'un noyau de rotor (22) fourni sur le côté circonférentiel interne dudit stator (70) par l'intermédiaire d'un entrefer et configuré par stratification de feuilles d'acier électromagnétique, d'une pluralité d'aimants permanents (23) fixés à intervalles sur une partie de surface circonférentielle dudit noyau de rotor (22), et d'un arbre (19) qui traverse le long d'une ligne d'axe central dudit noyau de rotor (22),
dans lequel une saillie (74) dudit noyau de rotor (22) est fournie entre deux aimants permanents (23) adjacents et s'étend dans une direction axiale, et un entrefer (75) est formé entre ladite saillie (74) et ledit aimant permanent (23), et
lorsque le nombre de pôles desdits aimants permanents (23) est fixé à P et le nombre desdites fentes (73) est fixé à N, la relation de P:N = 2n:12n est établie, où n est un nombre entier supérieur ou égal à 2 ;
**caractérisé en ce que**
une longueur d'entrefer entre la circonférence interne dudit noyau de stator (12) et la circonférence externe desdits aimants permanents (23) est inférieure ou égale à 1,0 mm ; lesdits aimants permanents (23) ne contiennent pas de terre rare lourde et sont incorporés dans ledit noyau de rotor (22) avec les côtés latéraux dudit aimant permanent (23) étant entourés par lesdites saillies (74) à l'exception d'une partie incurvée d'une partie de circonférence externe ;
un diamètre externe dudit moteur est de 80 à 100 mm,
une puissance de sortie de celui-ci est de 400 à 900 W, et une épaisseur de centre circonférentiel dudit aimant permanent (23) est de 2,4 à 4,2 mm ; et
lorsqu'une épaisseur de centre circonférentiel dudit aimant permanent (23) est fixée à t et une longueur circonférentielle dudit aimant permanent (23) est fixée à Wm, la relation de t/Wm ≥ 0,2 est établie ; et
lorsqu'une hauteur de ladite saillie (74) fournie entre lesdits aimants permanents (23) est fixée à Wc et une épaisseur des deux parties d'extrémité circonférentielles dudit aimant permanent (23) est fixée à We, la relation de 1,8 mm ≤ We ≤ Wc est établie.

2. Moteur de type à aimant permanent selon la revendication 1, dans lequel lesdits enroulements d'induit (40, 41) sont de multiples enroulements polyphasés.

3. Appareil de direction assistée électrique pour un véhicule, ledit appareil de direction assistée électrique utilisant le moteur de type à aimant permanent selon l'une quelconque de la revendication 1 ou de la revendication 2.
